# EUROPEAN PATENT APPLICATION

(11) **EP 2 662 172 A1**
(43) Date of publication of application: **13.11.2013**
(21) Application number: 13166601.8
(22) Date of filing: 06.05.2013
(51) Int. Cl.: B23D 47/02, B23D 59/00, B27B 5/07

(54) **Vertical sawing machine and method for cutting panels in portions**

(30) Priority: 07.05.2012 IT BO20120248
(71) Applicant: Prolignum S.R.L., 40037 Sasso Marconi (Bologna) (IT)
(72) Inventor: Elefante, Chiara, 40123 Bologna (IT); Tomasello, Maria Pia, 40050 Monte San Pietro (Bologna) (IT)
(74) Representative: Fuochi, Riccardo

(57) **Abstract**

A vertical sawing machine (1) for making a series of vertical and horizontal cuts on a panel (3) according to a scheme (L), has a support frame (2) with a vertical support plane with vertical columns (9) to support the panel (3) in a vertical position, gripping elements (12, 13) for gripping the panel (3) in the upper part and a support device (22) for supporting the panel (3) in the lower part, a transversally mobile upright (4) with a cutting group (5), a control and management group for supervising the functions of the machine (1), which includes a memory for storing the cutting scheme (L), a device for checking, following the cutting scheme (L) stored, for possible interference between the support plane (9-11) and the cutting group (5), while the cutting scheme (L) is being carried out, and a device for reorganising the cutting scheme (L) to avoid interference between the support plane (9-11) and the cutting group (5).

## Description

### TECHNICAL FIELD OF THE INVENTION.

The present invention concerns a vertical sawing machine and a method for cutting panels in portions.

### STATE OF THE ART

In the field of cutting panels made from wood, chipboard, plywood, plastic and similar flat bodies of large dimensions, vertical sawing machines are known in which the panel is arranged in practically vertical position allowing the need for a flat surface for cutting the panel in smaller portions to be substantially reduced.

The conventional process for cutting panels in smaller portions foresees cutting the panel firstly into horizontal strips, starting from the top, removing the strips thus formed. Thereafter, the single strips previously formed are repositioned on the sawing machine and cut vertically to size.

This process is relatively slow and laborious and generally requires the presence of two workers to remove and move the panel and the portions being formed.

In order to try to eliminate these drawbacks, patent US 3 890 861 describes a process for cutting panels in smaller portions in which the cutting of the horizontal strips takes place starting from the bottom.

The horizontal strip, which has been previously cut from the bottom, is then rested on lower support rollers. Thanks to the fact that the strip is a short distance from the lower support, or is already resting on the support, it is not necessary for there to be two workers to remove and move the strip and the portions being formed. Thereafter, the strip is moved laterally against an adjustable abutment, outside of the bulk of the larger panel from which it has been cut, the panel in turn being kept up high through locking devices.

The horizontal strip, since it is outside of the bulk of the panel, can be cut vertically to size into the smaller portions, by means of the adjustable abutment that defines the cutting size.

European patent application EP-004926 A2 describes a method for cutting a panel into smaller portions. The method foresees holding the upper edge of the panel through locking jaws, then dividing the panel through a horizontal cut making at least one upper strip and a lower strip. Thereafter, the upper strip is lifted by a certain amount so that the lower strip can be cut, through horizontal movements of an upright that carries a circular saw, by vertical cuts to the finished dimensions, without the upper strip being damaged.

This cutting method is also not without its drawbacks.

During the cuts, the support of the panel is solely entrusted to the upper jaws and to some elements of the frame of the machine that ensure an adequate hold of the panel, and moreover the upright is also not sufficiently guided to allow an appropriate cutting precision.

### PURPOSES OF THE INVENTION.

A purpose of the present invention is to improve the state of the art.

Another purpose of the present invention is to make a vertical sawing machine of panels in smaller portions that is precise and versatile.

A further purpose of the present invention is to make a vertical sawing machine that makes the cutting of panels in smaller portions simpler, reducing the need for manual work by the operator to the minimum.

A further purpose of the present invention is to make a vertical sawing machine that allows optimal exploitation of the surface of the panel to be cut.

In accordance with an aspect of the invention a vertical sawing machine is provided according to independent claim 1.

According to another aspect of the present invention a method for cutting panels into smaller portions is provided according to independent claim 13.

The dependent claims refer to preferred and advantageous embodiments of the invention.

### BRIEF DESCRIPTION OF THE DRAWINGS.

Further characteristics and advantages of the invention will become clearer from the description of an embodiment of a vertical sawing machine, illustrated for indicating purposes in the attached drawings, in which:
figure 1 illustrates a perspective view of the vertical sawing machine according to the present invention;
figure 2 illustrates another perspective view with an element left out to better highlight some parts of the vertical sawing machine according to figure 1;
figure 3 illustrates some enlarged details of figure 2; figure 4 illustrates some enlarged details according to the previous figures;
figures 5 and 6 illustrate other enlarged details of the vertical sawing machine according to the previous figures;
figure 7 illustrates a front view of the vertical sawing machine according to the present invention;
figure 8 illustrates a rear perspective view from above of some enlarged details of the vertical sawing machine according to the present invention;

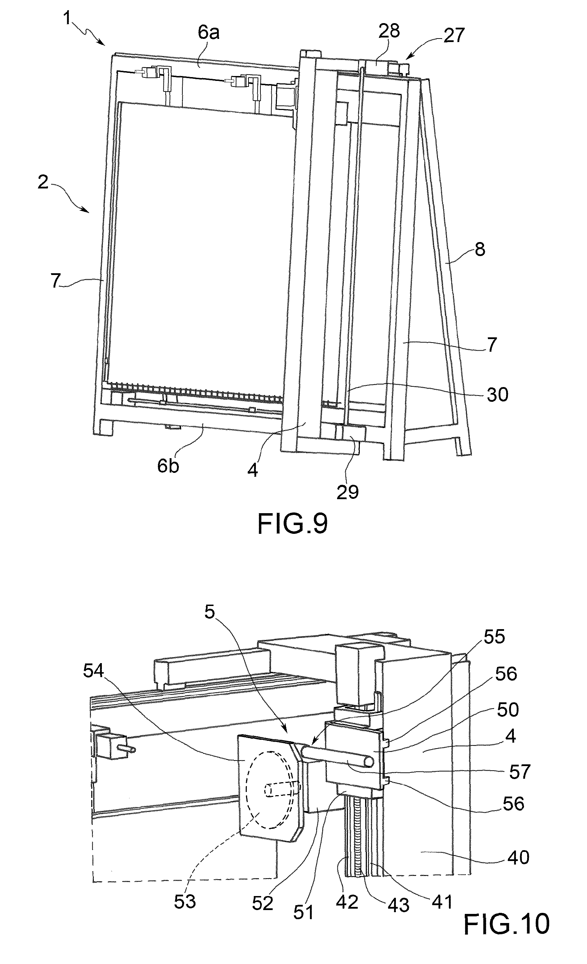

figure 9 illustrates a perspective view from the right side of the vertical sawing machine according to the present invention;
figures 10 and 11 illustrate some enlarged details according to the previous figures.

### EMBODIMENTS OF THE INVENTION.

With reference to the attached figures, reference numeral 1 wholly indicates a vertical sawing machine according to the present invention.

The vertical sawing machine 1 essentially comprises a vertical support frame 2 for supporting a panel 3, for example a panel made from wood, chipboard, plywood, plastic and similar flat bodies of large dimensions, which must be cut into smaller sized portions, a vertical upright 4 that carries a cutting group 5.

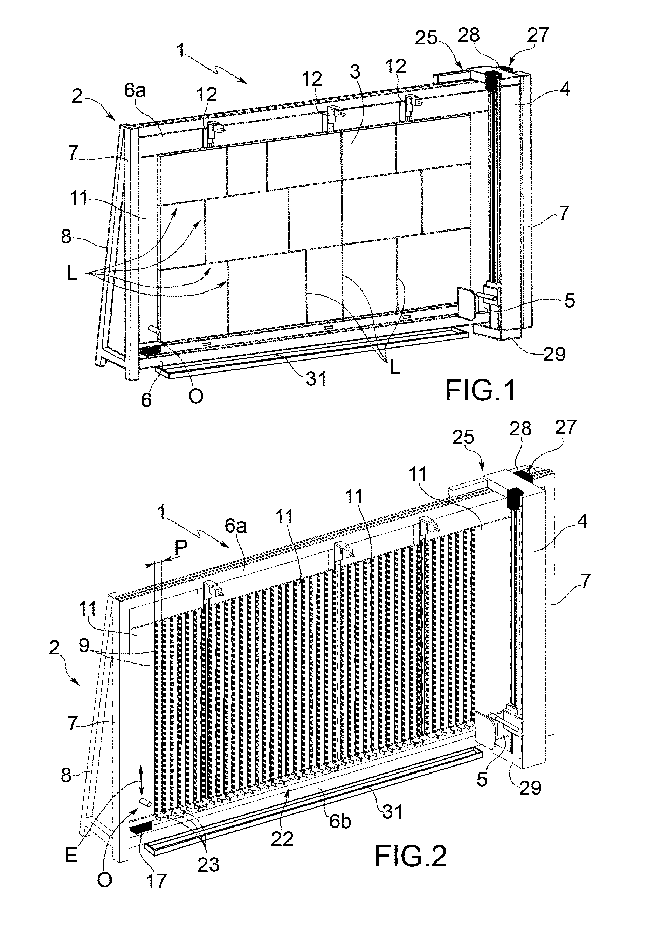

Figure 1 illustrates with lines "L" the cuts of the panel 3 into smaller sized portions that are possible with the machine according to the present invention.

As an example embodiment, the support frame 2 comprises an upper horizontal cross member 6a, a lower horizontal cross member 6b, and two uprights 7 that connect the two cross members 6a, 6b.

The upper horizontal cross member can be made with an H-shaped profile, the uprights 2 can be of the tubular type, for example with a square or rectangular section, and the lower cross member 6b can again be an H-shaped profile, or it can be tubular. All of these elements of the frame 2 are sized so as to define a very rigid structure.

The frame 2 is slightly inclined backwards, for example with an inclination of about six-nine degrees with respect to the vertical, to allow more secure resting of the panel 3 to be cut.

Due to this inclination backwards, the frame 2 also comprises two support legs 8 for resting the machine 1 on the ground.

In at least one of the support feet there is also an adjustment device (not illustrated) in order to be able to arranged the machine 1 flat.

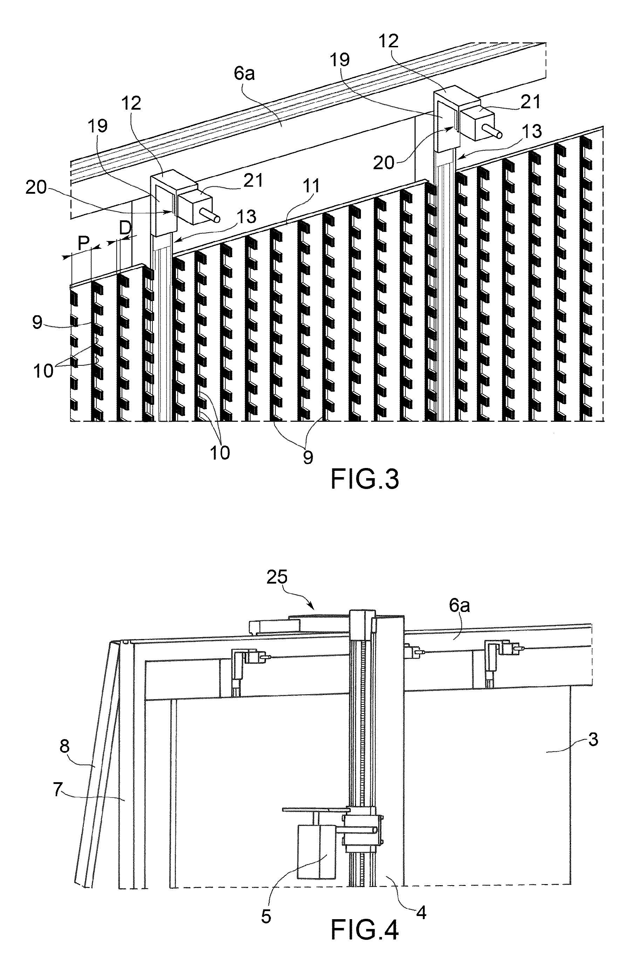

For the panel 3 to rest on, the machine 1 comprises a plurality of support columns 9 arranged vertically a transversal distance "P" apart, such a distance "P" being variable. Each column 9 has a thickness "D" and has a series of interruptions 10 (figure 3).

Overall, the columns 9 and the possible interruptions 10 define a plurality of support lines or points for the panel 3.

The columns 9 are fixed to some plates 11, or to frames (not illustrated), which together with the columns 9 are vertically mobile for a certain portion "E" with respect to the frame 2.

In order to allow the movement of the plates 11, the frame 2 comprises guides made from anti-friction material and actuators, for example of the pneumatic type (not illustrated), which act on the plates 11, or on the attachment frames of the columns 9.

In order to allow easier movement of the plates 11 with the columns 9, there may also be a device for compensating the weight of the plates 11, or attachment frames, with the columns 9, made for example with mechanical or pneumatic springs (not illustrated).

As will become clearer from the operation of the machine 1 described hereafter, such movement by a portion "E" of the plates 11 is to avoid possible interference of the columns 9 with the cutting group 5.

The columns 9 arranged vertically allow substantial cleaning advantages to be obtained: the dust that is generated in the machine during the cutting of the panels 3 falls downwards without depositing on the columns themselves.

Under the columns 9, at the bottom, there is a suction device (not illustrated) that can be of low power, because it still manages to effectively carry away all cutting residue, the dust still tending to fall down by gravity and not depositing on the columns 9, which on the other hand in known machines are arranged horizontally.

This is another advantage with respect to conventional machines in which there are horizontal columns. Indeed, the horizontal arrangement of the columns requires a more intense suction so as to be able to keep the dust sufficiently fast and in suspension in the flow of air to avoid deposits on the columns themselves.

The columns 9 can be built from solid material, for example Meranti wood, plywood, solid plastic, etc., or even made up of columns with brushes that allow the panel to be supported.

According to other embodiments that have not been illustrated, the columns 9 consists of a series of pins or brushes, or of tables, so-called sacrificial tables, that after a certain number of cutting operations of panels must be replaced.

In order to hold the panel 3, to lift and position it on the support plane of the columns 9, the machine 1 comprises gripping means that are exemplified by a series of grippers 12 arranged so as to hold the panel 3 on the upper side or on the right and left sides.

The aforementioned grippers 12 are positioned on respective vertical sliding guides 13 so as to be able to load and lift panels 3 of any commercial size in a balanced manner.

The vertical sliding guides 13 also define a further support surface for the panel 3.

As a non-limiting example and according to what is illustrated in the figures, there are three sliding guides 13 and they are positioned, starting from the point "0" arranged to the left of the machine, at transversal distances for example of 750 mm, 2450 mm and 3550 mm, so as to be able to lift panels 3 from 2200 mm to 4300 mm and, using a point "0" moved by 600 mm, also panels of 1800 mm.

Of course, a different number of guides 13 and grippers 12 and a different spacing are also possible without departing from the scope of the present invention. Alongside the sliding guides 13 are the aforementioned plates 11 of which there are a certain number, for example in the embodiment illustrated in the figures there are five plates 11.

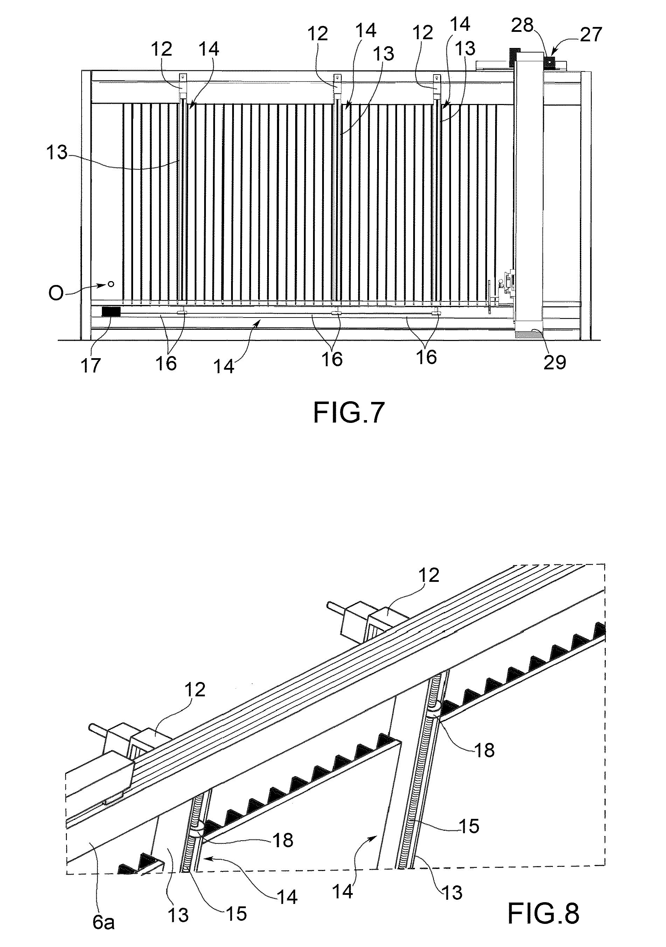

The plates 11 can be raised or lowered by a portion "E". Each of the grippers 12 comprises an approximately F-shaped profile 19, which runs on the vertical guide 13. Each profile 19 also comprises a nut screw 18 (figure 8) locally fixed with respect to the rotation, but that can move up and down with the profile 19 itself.

The guides 13 can be of the rolling type, or sliding guides, and have a profile with low thickness, thus allowing the panel 3 to be cut to be held very close to the plane of the frame 2.

The raising and lowering of the grippers 12 takes place through actuator means 14.

As an example, the aforementioned actuator means 14 comprise recirculating ball screws 15, specifically one screw 15 for each gripper 12, actuated through a relative transmission 16 by an electric motor 17, for example an electric stepper motor.

The actuator means 14 can also be of another type, for example they can comprise rack and pinion translation devices or conveyor belt devices.

In the case in which a stepper motor is used for moving the grippers 12, it should be noted that the stepper motor can already comprise its own internal position control and therefore may not need any encoders, or other sensors, for controlling position, thus simplifying the construction of the device.

The calibration on this type of motor can be done by collision, i.e. arriving at a fixed point, mechanically hitting the fixed point itself with the minimum current and using this point as start point zero.

Therefore, in order to calibrate the position of the grippers 12, the grippers 12 are moved upwards into the point of maximum height where they stop and this constitute the zero point of the grippers 12.

According to what has been illustrated in greater detail in figures 7 and 8, the transmission 16 takes the motion from the electric motor 17, which is arranged on the lower horizontal cross member 6b on the left (observing the machine from the front), and sends the motion through shafts and angular transmissions to the recirculating ball screws 15 that have a suitable engagement on the angular transmission.

On the screws 15, rotatably fixed to the upper cross member 6a, the nut screws 18 connected to the profiles 19 and therefore to the grippers 12 are screwed. In this way, through the rotation of the screws 15 it is possible to raise or lower all of the nut screws 18 connected to the grippers 12 by the same amount. Moreover, since the screws 15 are fixed to the upper cross member 6a, the same screws 15 work under traction allowing them to be made with a relatively small diameter, in any case less than the diameter necessary if working under compression.

In order to grip the panel 3, each gripper comprises a gripping device 20 equipped with a cylinder 21 for example pneumatically-actuated. The actuation of the gripping device 20 takes place directly without intermediate control linkages so as to adapt perfectly to all thicknesses of the panels 3.

On the lower cross member 6b there is also a support device 22 to support the panel 3 in the lower part.

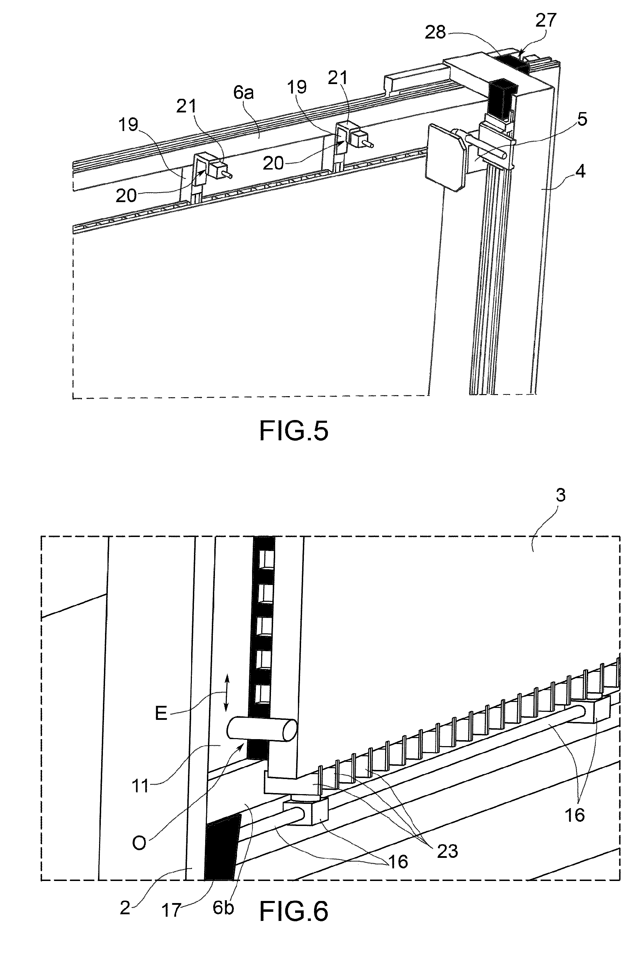

The support device 22 is retractable to avoid interference with the panel 3 during the raising from the ground of the same panel through the grippers 12, as will become clearer from the operation of the machine 1 described hereafter. In the embodiment illustrated in greater detail in figure 6, the support device 22 comprises a series of rods 23 each of which comprises an appendage 24 projecting above. Each rod 23 has an upper surface aligned with that of the other rods 23 so as to define a precise reference plane for supporting the panel 3.

One way for making the upper reference surface of the rods 23 is to use the same cutting group 5 of the machine 1, equipped with a suitable milling tool, so as to level off the surface of all of the rods 23.

During the operation of the machine 1, the support device 22 can be retracted completely, for example when it is necessary to lift the panel 3, and can also be used to lock the panel 3 at the bottom through the appendages 24 that embrace the panel in a similar way to the upper gripping device 20.

The appendages 24 are of sufficient length to allow the panel 3 to be locked even when it is slightly raised from the support surface of the rods 23.

For the extraction and retraction movement of the rods 23 of the support device 22 there are suitable actuators (not illustrated), for example of the pneumatic type.

Since in some particular cases, it may be necessary to move the panel or a strip resting on the support device 22 transversally, the rods 23 can also be replaced by bushings or bearings. For example, the rods 23 can be replaced with sintered steel bushings arranged rotating on respective cylindrical support shafts.

Below the support device 22 there can be a tray 31 that is used to recover some cut parts, for example the trimmings. The upright 4 that carries the cutting group 5 can translate in a controlled manner from right to left and vice-versa with respect to the frame 2 (observing the machine 1 from the front).

The upright 4 at the top comprises a first sliding group 25 that allows the upright 4 to be slidably connected to the upper cross member 6a.

The first sliding group 25 comprises, for example, some rolling bearings that run on ground surfaces formed in the upper cross member 6a, or it can comprise linear guides.

The upright 4 at the bottom comprises a second sliding group 26 that allows sliding support on the lower cross member 6b. The second sliding group 26 comprises, for example, a rolling bearing that rests on a ground surface formed in the lower cross member 6b.

The upright 4 also comprises a horizontal translation device 27 that allows the upright 4 itself to translate horizontally and in a controlled manner from right to left, and vice-versa.

The horizontal translation device 27 comprises upper translation means 28 associated with the upper part of the frame 2, for example associated with the upper cross member 6a, and lower translation means 29, associated with the lower part of the frame 2, for example associated with the lower cross member 6b.

The upper and lower translation means 28, 29 are connected together with synchronisation means 30 that allow identical translation movements in the upper and lower part of the upright 4.

According to a version of the present invention, the upper and lower translation means each comprise a pinion (not illustrated) that is engaged with a respective rack (not illustrated) fixed to the upper cross member 6a and to the lower cross member 6b, or in other parts of the frame 2. The upper and lower translation means 28, 29 can be actuated by a single electric motor or by two independent electric motors, they can be *brushless* electric motors or asynchronous electric motors slaved to an inverter.

In the case of a single electric motor, the synchronisation means 30 comprise a mechanical transmission that makes the upper and lower pinions move with the same rotation speed.

In the case of two electric motors, the synchronisation means 30 comprise rotation sensors of the motors, for example encoders, and sensor means of the rotation speed of the motors.

Also in this case the upper and lower pinions rotate with the same rotation speed.

The upright 4 can be made with a profile 40 having a square or rectangular section, for example about 200 mm x 200 mm or 200 mm x 300 mm.

The upright 4 and the relative upper and lower translation means 28, 29 allow a safe movement of the cutting group 5, and moreover the whole assembly is very rigid, allowing very precise cuts to be made.

The upright 4 on the left side (observing the machine from the front) has a pair of guides 41, 42 arranged vertically and a recirculating ball screw 43 to provide a vertical movement to the cutting group 5.

The cutting group 5 comprises a blade carriage 50 and a trolley 51. The blade carriage 50 comprises an electric motor 52 on which a blade 53, or a similar rotary tool, and a protection 54 for the blade 53 are mounted.

The blade carriage 50 is mounted transversally onto the trolley 51 through guides 56 to allow penetration movement of the blade 53 in the panel 3.

An actuator is also provided (not illustrated), for example of the pneumatic type, for example arranged between the guides 56 to carry out the penetration movement of the blade 53 in the panel 3, such an actuator, which has controlled movement, is also used to adjust the depth of the cut.

The trolley 51 is in turn mounted on the guides 41, 42 and has a nut screw coupled with the screw 43 for the vertical movement.

The electric motor 52 can be of the so-called low-profile type, specifically for cutting machines.

The motors of this type have a through shaft with outlets and support bearings on both sides, and are also suitable for directly supporting tangential loads due to the cutting tool.

The motor 52 is mounted on a rotary support 55 equipped with a rotation pin 57 to allow the rotation of the motor 52, blade 53 and protection 54 assembly.

The position of the rotation pin 57 must be close to the barycentre of the motor 52, blade 53 and protection 54 assembly to allow a rotation with minimum effort.

The rotation of the motor 52, blade 53 and protection 54 assembly is obtained by actuator means (not illustrated) that define a rotation angle of 90 degrees.

The machine 1 also comprises control and management means, for example microprocessor means (not illustrated) or other equivalent means, which supervise the functions of the machine and also allow the cutting schemes to be carried out on the panels to be stored.

All of the movements of the different parts of the machine 1 are controlled by the control and management means, or equivalent means, and can be set through a keypad and a viewer arranged on the machine itself (not illustrated). The machine 1 according to the present invention can make cuts in the two directions, vertical and horizontal, according to a scheme illustrated in figure 1 as an example with the lines "L".

Moreover, the machine 1, by adjusting the cutting depth, allows an incision to be made before cutting.

The control and management means of the machine 1 comprise storage means in which a certain cutting scheme "L" can be stored with all of the positions of the horizontal and vertical cuts to be made in the panel 3. The storage means also store the positions of the columns 9, including the transversal distances "P", the thicknesses "D" and the series of interruptions 10.

In the case in which there are posts or brushes instead of columns, the position of the posts and the relative sizes will be stored.

During the cutting operations of the panel 3, this will allow interference between the columns 9, the posts or the brushes and the blade 53 of the cutting group 5 to be avoided, since the control and management means comprise means for checking for the aforementioned interference and reorganisation means that allow the cutting scheme "L" of the panel 3 to be stored, whilst still allowing the same dimensions of the cut pieces.

Such means for checking for interference can be made for example through a software programme present in the control and management means; the reorganising means can be made for example through a software programme present in the control and management means.

Alternatively, the means for checking for interference and the reorganising means can be in an external device (not illustrated), in communication with the machine 1, which sends the cutting schemes to the machine 1.

Such an external device can have software suitable for checking for interference and for modifying the cutting scheme "L" of the panel 3.

If the aforementioned interference occurs, the reorganising means take care of modifying the cutting scheme "L" arranging the sequence of pieces to be cut from the panel 3 differently.

In use, through the keypad of the machine 1, or other equivalent data insertion means, the cutting scheme "L" to be carried out is inserted and the panel 3 to be cut is loaded.

The machine 1 can also be loaded with the panel 3 directly resting on the ground, which is made possible thanks to the ability of the support device 22 to completely retract.

By resting the panel 3 to be sawn on the ground and on the machine 1, the panel 3 is held by the grippers 12, lifted and placed in the machine without any effort by the operator.

Once it is loaded in the machine, the panel 3 can, if required, optionally be trimmed on the lower side so as to define a reference plane for subsequent cuts.

The grippers 12 lift the panel 3 by a certain amount, for example about 100 mm, above the rods 23 of the support device 22.

Then the cutting group 5 is arranged with the blade horizontal and it makes a horizontal trimming cut, i.e. a cut of a few millimetres to make a lower horizontal side perfectly straight, starting from the start of the panel 3 on the right (observing the machine from the front). Meanwhile, the support device 22 is again retracted and the trimmed part falls to the ground, or in the suitable tray 31 provided to recover the trimmed parts more easily. The panel 3 is then made to descend up to about a millimetre from the support plane of the support device 22.

Before the panel 3 descends, the support device 22 is made to come out. When the panel is in cutting position about a millimetre from the support plane of the support device 22, the support device 22 retracts, closing the appendages 24 of the rods 23 on the panel 23.

The panel 3 is thus locked against the rear plane of the machine 1 on the columns 9, or on the other equivalent support means.

The cutting group 5, still with the blade horizontal, goes to the cutting height of the strip to be produced and, for example starting from the right, makes the cut.

If the horizontal cutting position interferes with the columns 9, with the other equivalent support means, i.e. the blade does not pass inside the interruptions 10 of the columns 9, or between the posts, the control and management means can vertically move the columns 9 with the relative plate 11 - or with the relative support frame of the columns (not illustrated) - with respect to the frame 2 by actuating the suitable actuators, by the amount "E" mentioned above, such an amount "E" being suitably chosen to avoid interference with all of the horizontal cutting measures. It will also be possible to modify the vertical gripping position of the panel 3 by the support device 22.

The strip, which before was held by the appendages 24, is freed commanding the support device 22 to come out, i.e. open, and the strip can therefore rest on the rods 23.

The grippers 12, which hold the remaining upper portion of panel above the freshly cut strip, rise by a certain amount, for example about 250-300 mm.

A sufficient space is thus created to insert the blade 53 of the cutting group 5 arranged vertically above the freshly cut strip and thus allow the vertical cutting of the strip resting on the rods 23.

The cutting group 5 rotates with the blade 53 arranged in a vertical direction and then moves above the strip with the upright 4 in position to make a vertical trimming cut on one of the vertical sides, on the right or left of the strip, preferably in the side closest to the horizontal end cut position.

The subsequent vertical cut will be a certain distance from the trimming cut according to what is required by the cutting scheme "L" and so on for the successive vertical cuts that will be a certain transversal distance from the previous cut, until the cutting of all the portions of the panel provided by the cutting scheme "L" are complete.

The movements of the upright 4 and the actuation of the cutting group 5 will be commanded by the control and management means of the machine 1, according to the cutting scheme "L" set.

Since it is the cutting group 5 that moves transversally through the upright 4, it is no longer necessary to move the strip laterally against a reference abutment.

It is thus possible to make any vertical cutting sequence without moving the strip to bring it into abutment at the measurement to be cut.

All of the cutting operation is thus very quick and no intervention is required from the operator.

It should be noted that, if in the cutting scheme "L" previously stored in the storage means present in the control and management means there is a possible collision with the columns 9, or with the posts, the means for checking for interference will carry out a check of the possible interference and will send a signal to the reorganising means which, in turn, will choose to make the cut in another position, changing the order of programmed cuts, i.e. the cutting scheme "L".

If the cutting scheme does indeed have such interference it is possible to exploit the scrap available in the strip: the control and management means can modify the dimensions of the trimming cuts on the right and/or left. In particular, the control and management means can choose to move the initial cutting point and make a trimming cut of greater size on the right with respect to the one on the left, leaving the order of the cuts of the pieces unchanged.

Alternatively, the reorganising means can interpose one or more smaller cuts, for example cuts of 20 mm, so as to move the vertical cut between one portion and the other. If in the strip there is no scrap available, the reorganising means can change the order of the portions to be produced according to a predetermined scheme.

If despite all these alternatives, exceptionally the means for checking for interference still find interference with the columns 9, or with the posts, the machine asks the operator to take the remaining portion of strip onto point "0".

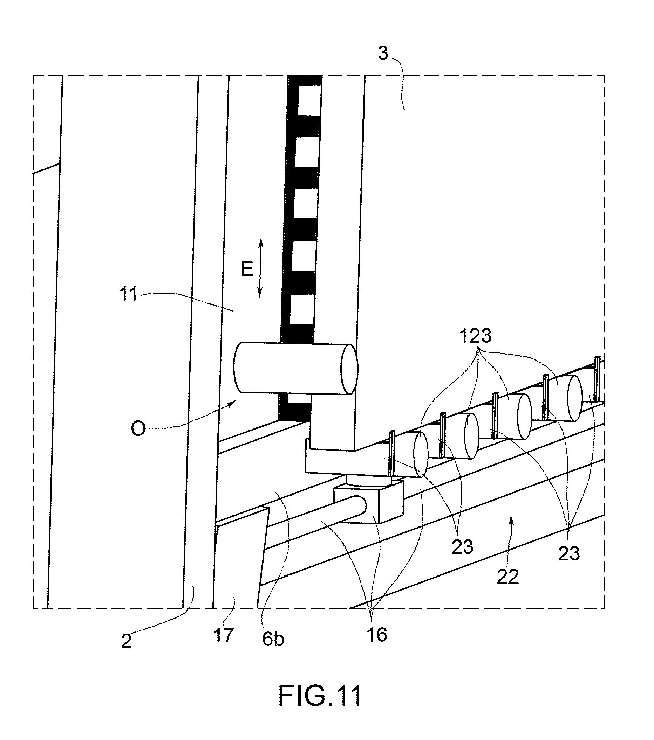

Such movement towards point "0" can be facilitated thanks to a version of the support device 22 illustrated in figure 11.

In this version, the support device 22 comprises a series of rods 23, like in the support device 22 illustrated in figure 6, alternating with a series of rollers 123, which allow easier sliding of the strips to be cut.

In order to facilitate such sliding, the rollers 123 can have a support surface slightly above the support surface of the rods 23.

The present invention thus conceived can undergo numerous modifications and variants all of which are covered by the inventive concept.

Moreover, all of the details can be replaced by other technically equivalent elements. In practice, the materials used, as well as the contingent shapes and sizes, can be whatever according to the requirements without for this reason departing from the scope of protection of the following claims. In the case in which the technical characteristics mentioned in the claims are followed by reference numerals, such reference numerals are introduced with the sole purpose of increasing the clarity of the claims and consequently the aforementioned reference numerals have no limiting effect on the interpretation of each element identified as an example of such reference numerals.

## Claims

1. Vertical sawing machine (1) for making a series of vertical and horizontal cuts on a panel (3) according to a predetermined scheme (L) to form smaller panel portions, comprising a support frame (2) equipped with a substantially vertical support plane (9-11) to support the panel (3) in a substantially vertical position, gripping means (12, 13) to grip the panel (3) in the upper part and a support device (22) to support the panel (3) in the lower part, an upright (4) that is transversally mobile with respect to the support frame (2), a cutting group (5) supported in a vertically mobile fashion with respect to the upright (4), control and management means to control the functions of the machine (1), equipped with means for memorising the cutting scheme (L), **characterised in that** said control and management means comprise, or are in communication with, means for verifying, following the memorised cutting scheme (L), possible interference between the support plane (9-11) and the cutting group (5), while the cutting scheme (L) is being carried out, and rearrangement means of the cutting scheme (L) to avoid the aforementioned interference between the support plane (9-11) and the cutting group (5).

2. Machine (1) according to claim 1, wherein the support plane comprises a series of splines (9) arranged vertically, or equivalent support means, for example tips.

3. Machine (1) according to claim 2, wherein said splines (9) are arranged a transversal distance (P) apart from one another and have a series of gaps (10).

4. Machine (1) according to claim 2 or 3, also comprising plates (11), or fastening frames, to which said splines (9) are fixed, said plates being vertically mobile for a certain portion (E).

5. Machine (1) according to any one of the previous claims, wherein said upright (4) comprises upper translation means (28) associated with an upper part of the frame (2, 6a).

6. Machine (1) according to any one of the previous claims, wherein said upright (4) comprises lower translation means (29) associated with a lower part of the frame (2, 6b).

7. Machine (1) according to claim 5 or 6, wherein said upper and/or lower translation means (28, 27) comprise at least one electric motor and a rack and pinion transmission, said rack being fixed to the frame (2), or equivalent transmission means: belt, worm screw.

8. Machine (1) according to claim 6 or 7, comprising synchronisation means (30) to make the upper translation means (28) and the lower translation means (29) move in the same way.

9. Machine (1) according to any one of the previous claims, wherein said control and management means comprise microprocessor means to control the movements of the different parts of the machine (1).

10. Machine (1) according to any one of claims 3 to 9, wherein said memorising means comprise a memory that memorises the cutting scheme (L), the position of the splines (9) and of the gaps (10), or the positions of the equivalent support means.

11. Method for making a series of vertical and horizontal cuts on a panel (3) according to a predetermined cutting scheme (L) to form smaller panel portions, comprising a step of memorising the cutting scheme (L), gripping the upper part of the panel (3) through gripping means (12), resting the panel (3) on a substantially vertical support plane (9-11), supporting the panel (3) in the lower part through a support device (22), making a first horizontal cut through a cutting group (5) making a lower strip and an upper portion, lifting the upper portion of the panel (3) that was just cut by a certain amount through the gripping means (12), keeping the lower strip still, making a series of vertical cuts on the lower strip through said cutting group (5) until the portions of the panel foreseen by the cutting scheme (L) are obtained, **characterised in that** it comprises a step for verifying a possible interference between the cutting scheme (L) and said support plane (9-11), and if said interference occurs, rearranging the sequence of vertical cuts foreseen by the cutting scheme (L).

12. Method according to claim 11, wherein the step of verifying a possible interference between the cutting scheme (L) and the support plane is followed by a step of moving said lower strip laterally.

13. Method according to claim 11 or 12, wherein said step of resting the panel (3) on a substantially vertical support plane comprises resting the panel (3) on a plurality of resting lines or points defined through splines (9) with gaps (10), or through other equivalent support means, for example a series of tips or brushes.

14. Method according to claim 13, wherein the step of verifying a possible interference between the cutting scheme (L) and the support plane comprises verifying the interference between the cutting scheme (L) and said plurality of resting lines or points.

15. Method according to any one of claims 11 to 14, comprising providing a vertical upright (4) that is transversally mobile with respect to said panel (3), said upright (4) having an upper end and a lower end, and wherein said making of a series of vertical cuts on the lower strip comprises moving the vertical (4) upright laterally with controlled and equal movements of said upper and lower ends of said upright (4).
